Europäisches Patentamt

European Patent Office

Office européen des brevets

(19)

(11) Veröffentlichungsnummer: **0 031 824**
**B1**

(12) **EUROPÄISCHE PATENTSCHRIFT**

(45) Veröffentlichungstag der Patentschrift:
01.12.82

(51) Int. Cl.³: **B 23 K 1/20,** H 01 J 35/10,
B 23 K 1/19

(21) Anmeldenummer: **80901214.9**

(22) Anmeldetag: **07.07.80**

(86) Internationale Anmeldenummer:
**PCT/AT 80/00022**

(87) Internationale Veröffentlichungsnummer:
**WO 81/00226 (05.02.81 Gazette 81/4)**

(54) **VERFAHREN ZUM VERBINDEN EINZELNER TEILE EINER RÖNTGENANODE, INSBESONDERE DREHANODE.**

(30) Priorität: **12.07.79 AT 4851/79**

(43) Veröffentlichungstag der Anmeldung:
**15.07.81 Patentblatt 81/28**

(45) Bekanntmachung des Hinweises auf die Patenterteilung:
**01.12.82 Patentblatt 82/48**

(84) Benannte Vertragsstaaten:
**CH DE FR GB LI NL**

(56) Entgegenhaltungen:
**DE-A-1 937 351**
**DE-A-1 951 383**
**DE-A-2 807 561**
**DE-B-1 127 179**
**FR-A-2 258 704**
**GB-A-942 164**

(73) Patentinhaber: **METALLWERK PLANSEE GESELLSCHAFT M.B.H., A-6600 Reutte, Tirol (AT)**

(72) Erfinder: **SONNWEBER, Alfred, A-6631 Lermoos 135 Tirol (AT)**
Erfinder: **BILDSTEIN, Hubert, Prof. Dr. Denglstrasse 9, A-6600 Reutte Tirol (AT)**
Erfinder: **EGGER, Lambert, Bergbahnstrasse 98, A-6600 Höfen Tirol (AT)**
Erfinder: **PETTER, Helmut, Kaiser Lotharstrasse 5, A-6600 Reutte Tirol (AT)**

(74) Vertreter: **Lohnert, Wolfgang, Dr., Metallwerk Plansee GmbH, A-6600 Reutte, Tirol (AT)**

Verfahren zum Verbinden einzelner Teile einer Röntgenanode, insbesondere Drehanode

Die Erfindung betrifft ein Verfahren zum Verbinden einzelner Teile einer Röntgenanode, insbesondere Drehanode, bei welchem ein aus einem hochschmelzenden Metall oder dessen Legierungen bestehender Teil mit einem oder mehreren Graphitteilen verlötet wird.

In kommerziellen Röntgenapparaturen werden die Röntgenstrahlen in der Regel durch den Beschuss hochschmelzender Metalle mit Elektronen erzeugt. Da bei diesem Prozess nur etwa 1% der Elektronenenergie in Röntgenstrahlung umgesetzt wird, die restlichen 99% der Elektronenenergie aber in Wärme übergeführt werden, müssen bei der Auslegung und beim Bau von Röntgenanoden Massnahmen ergriffen werden, um die auf der Elektronenauftreffstelle erzeugte Wärme von der Röntgenanode abzuleiten bzw. abzustrahlen. Graphit ist ein bekannt guter Wärmestrahler. Daher wurde in der Vergangenheit bereits vorgeschlagen, auf Röntgenanoden, insbesondere Röntgen-Drehanoden aus hochschmelzenden Metallen für Hochleistungsröhren, Graphitteile aufzulöten (z.B. DE-A-1 951 383), um damit die Wärmeabfuhr zu verbessern. Für derartige Lötverbindungen wurden eine Reihe von Lötmitteln mit niederem Dampfdruck und guter Benetzbarkeit vorgeschlagen, insbesondere die Metalle Titan, Zirkonium, Platin und Paladium-Nickel-Legierungen. Die Lötungen finden im Hochvakuum statt.

Derartige Lötverbindungen waren bisher häufig die Ursache für Betriebsstörungen. Die Haftung der verlöteten Teile war nicht zufriedenstellend. Die Lötverbindungen liessen sich nur in unzureichend reproduzierbarer Qualität fertigen. Die Lötmittelschicht war in der Regel zu dick und selbst innerhalb einer Lötverbindung von nachteilig ungleichmässiger Schichtstärke. Die zu verbindenden Flächen wiesen lötmittelfreie Hohlräume, Erstarrungslunker auf, die zudem durch zerstörungsfreie Prüfmethoden nicht hinreichend zuverlässig nachweisbar waren.

Ursache für ungleichmässig dicke Lötmittelschichten sind vor allem die Schwierigkeiten bei der exakten Justierung der zu verbindenden Teile während des Lötvorganges und der damit zusammenhängenden Notwendigkeit, eher zuviel als zuwenig Lötmittel während des Lötvorganges bereitzustellen, um somit lötmittelfreie Zonen weitgehend zu verhindern. Die Ursachen für Lunker liegen unter anderem darin, dass die als Lötmittel verwendeten Metalle oberflächlich oxidiert sind, so dass sich während des Lötvorganges durch Reaktion mit Graphit Kohlenoxidgase bilden, die nicht ausreichend gut aus der Lötschicht entweichen können.

Die Gewährleistung einer homogenen Lötverbindung bei möglichst geringer Lötmittelschichtdicke ist eine Grundvoraussetzung für die bei derartigen Röntgenanoden-Typen vorgesehene vergrösserte Wärmekapazität und erhöhte Wärmestrahlung durch die Graphitteile. Sind diese Voraussetzungen nicht gegeben, so sind in vielen Fällen eine Überhitzung einzelner Drehanodenbereiche, Rissbildung und Verwerfungen in der Anode und ein Aufreissen der Lötverbindung die Folge. Darüberhinaus können die oben genannten Gaseinschlüsse innerhalb der Lötschicht während des Röntgenbetriebes durch die Poren des Graphits langsam aus der Anode entweichen und führen dann innerhalb der hochevakuierten Röntgenröhre zu höchst unerwünschten elektrischen Instabilitäten, Entladungen und Kurzschlüssen.

Aufgabe vorliegender Erfindung ist es daher, ein Verfahren zum Verbinden hochschmelzender Metallteile und Graphitteile in Röntgenanoden, insbesondere Drehanoden, durch Löten zu schaffen und dabei die geschilderten Nachteile bisheriger Verfahren zu umgehen.

Diese Aufgabe wird erfindungsgemäss dadurch gelöst, dass in die zu verlötende Graphitoberfläche, die Ränder dieser Graphitoberfläche nicht schneidende, im Querschnitt vorzugsweise halbkreisförmige Nuten eingebracht werden und dass die Graphitteile etwa senkrecht zu der zu verlötenden Graphitoberfläche durchbohrt werden, wobei die Bohrungen in die Nuten einmünden, so dass überflüssiges Lötmaterial abfliessen und bei der Lötung entstehende Gase entweichen können.

Die Nuten werden in der Regel einige Zehntel bis wenige Millimeter tief, vornehmlich in Ringform in die zu verlötende Graphitoberfläche eingefräst. Der Abstand einzelner Nuten im Bereich der zu verlötenden Oberfläche sowie die Anzahl der Bohrungen ist den zu verbindenden Werkstoffen, dem Lötmittel und den Lötbedingungen anzupassen.

Für die Graphitteile haben sich verschiedene hochfeste Graphitsorten bewährt. Als hochschmelzende Metalle für Röntgenanoden werden vorzugsweise Wolfram, Molybdän und verschiedenartige Molybdän-Legierungen verwendet. Der Bereich der Elektronenauftreffstelle bzw. der Elektronenbrennbahn wird vorteilhafterweise aus Wolfram oder Legierungen des Wolframs mit Rhenium, Osmium, Iridium, Rhodium, Platin und anderen gefertigt.

Die Anwendung des Verfahrens ist nicht auf eine bestimmte geometrische Form von Röntgenanoden beschränkt. Derzeit kommen jedoch vornehmlich teller- oder diskusförmige Drehanoden von Hochleistungs-Röntgenröhren mit hohem Wärmeanfall für die Anwendung des erfindungsgemässen Verfahrens in Frage.

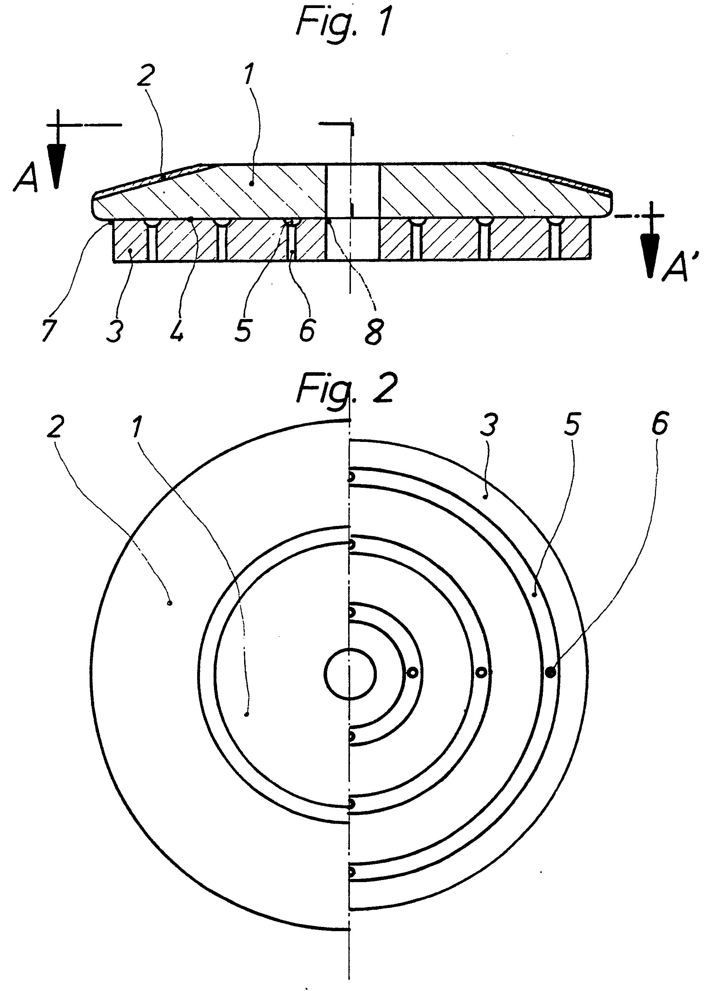

Die Erfindung wird anhand der Fig. 1 und 2 näher erläutert.

Fig. 1 zeigt einen Schnitt durch eine Röntgendrehanode in Richtung der Drehachse.

Fig. 2 zeigt einen Schnitt durch die Drehanode längs der Linie AA' in Fig. 1.

Wie in Fig. 1 dargestellt, weist die Röntgendrehanode einen oberen Teil (1) aus einem hochschmelzenden Metall, beispielsweise einer Molybdän-Legierung, auf. Der Bereich der Brennbahn (2) ist aus einer Wolfram-Legierung, beispielsweise Wolfram-Rhenium, gefertigt. Zur Verbesserung der Wärmeabstrahlung von der Drehanodenunterseite wird eine Graphitscheibe (3) auf den Metallteil der Drehanode aufgelötet. Die Verbindung erfolgt im Bereich der Grenzlinie (4). Um nun eine einwandfreie Lötverbindung zu erhalten, werden in die zu verlötende Graphitoberfläche Nuten (5) eingefräst und von diesen Nuten ausgehend werden Bohrungen (6) zur gegenüberliegenden Graphitoberfläche angebracht. Im weiteren wird das Lötmittel, beispielsweise Zirkonium, in bekannter Weise in Draht- oder Folienform auf die zu verlötende Graphitoberfläche aufgebracht. Dann werden die zu verlötenden planparallelen Flächen von Graphitscheibe und hochschmelzendem Metallteil aufeinandergepresst, die Anode in diesem Zustand in einen Hochvakuum-Ofen übergeführt und mittels Induktionserhitzung auf eine solche Temperatur gebracht, dass das Lötmittel langsam, an der Anodenaussenseite beginnend, zum Schmelzen kommt. Da das Lötmittel eine gute Benetzbarkeit mit hochschmelzenden Metallen und Graphit aufweist und gegenüber diesen eine positive Kapillarkraft besitzt, wird ein gleichmässiges Verlöten der Teile unter Gewährleistung einer dünnen Lötschicht erreicht. Das überflüssige Lötmittel fliesst über die Nuten und Bohrungen ab. Gleichzeitig entweichen die bei der Lötung entstehenden oder während der Lötung aus den Graphitporen in die Lötschicht gelangenden Gase über die Nuten und Bohrungen nach aussen.

Anhand der Fig. 2 lässt sich die vorzugsweise kreisförmige Gestaltung der Nuten in der Graphitoberfläche erkennen. Die Nuten können auch spiralförmig oder in radialer Richtung angebracht werden. Entscheidend ist lediglich, dass die Nuten innerhalb der Ränder (7 und 8) auf der Graphitoberfläche enden, das heisst, die Ränder (7 und 8) nicht schneiden.

In Abwandlung des oben beschriebenen Verfahrens kann das Lötmittel ausschliesslich oder überwiegend in die Nuten eingebracht werden. Aufgrund der positiven Kapillarkräfte wird das flüssige Lötmittel während des Lötvorganges dann in ausreichender Menge in die Lötfläche hineingezogen, ohne unerwünscht dicke Lötmittelschichten zu bilden.

Derartige Lötverbindungen in Drehanoden zeigen einen hervorragenden Wärmeübergang, so dass es weder zu Verzug noch zu Rissen innerhalb der Anode kommt. Die Haftung der Lötverbindung ist voll zufriedenstellend. Im Röntgenbetrieb zeigen derartige Anoden kein unkontrolliertes Gasen mit Entladungen und Kurzschlüssen als Folgeerscheinung.

**Patentanspruch**

Verfahren zum Verbinden einzelner Teile einer Röntgenanode, insbesondere Drehanode, bei welchem ein aus einem hochschmelzenden Metall oder dessen Legierungen bestehender Teil (1) mit einem oder mehreren Graphitteilen (3) verlötet wird, dadurch gekennzeichnet, dass in die zu verlötende Graphitoberfläche (4), die Ränder (7, 8) dieser Graphitoberfläche (4) nicht schneidende, im Querschnitt vorzugsweise halbkreisförmige Nuten (5) eingebracht werden und dass die Graphitteile (3) etwa senkrecht zu der zu verlötenden Graphitoberfläche (4) durchbohrt werden, wobei die Bohrungen (6) in die Nuten (5) einmünden, so dass überflüssiges Lötmaterial abfliessen und bei der Lötung entstehende Gase entweichen können.

**Claim**

Method for joining different parts of an X-ray anode, especially of a rotary anode, by brazing a part (1) consisting of a refractory metal or its alloys with one or more graphite parts (3), characterized in, that a plurality of in cross section preferably semicircular grooves (5), not intersecting the periphery (7, 8) of the graphite surface (4) to be brazed will be put into the graphite surface (4), and that the graphite parts (3) will be pierced approximately perpendicular to the graphite surface (4) to be brazed, in a manner that the bores (6) join the grooves (5), so that the spare brazing material and the gases, generated during brazing, can escape.

**Revendication**

Procédé pour assembler des parties individuelles d'une anode à rayons X, notamment une anode tournante, dans lequel une partie (1) constituée par un métal réfractaire ou ses alliages est brasée avec une ou plusieurs parties (3) en graphite, caractérisé en ce que dans la surface de graphite (4) devant être brasée sont ménagées des rainures (5), possédant une section transversale de préférence semi-circulaire, qui ne coupent pas les bords (7, 8) de cette surface de graphite (4), et que les parties en graphite (3) sont percées sensiblement perpendiculairement à la surface de graphite (4) devant être brasée, les perçages (6) débouchant dans les rainures (5) de sorte que l'agent à braser en excès peut s'écouler et que des gaz se dégageant lors du brasage peuvent s'échapper.

# Fig. 1

# Fig. 2